# EUROPEAN PATENT SPECIFICATION

(11) **EP 4 052 934 B1**
(45) Date of publication and mention of the grant of the patent: **10.01.2024**
(21) Application number: 22159421.1
(22) Date of filing: 01.03.2022
(51) Int. Cl.: B60C 29/02, F16K 15/20, B60C 29/00, F16K 15/18

(54) **VALVE FOR RUBBERIZED WHEELS WITH ACTUATING MECHANISM**
VENTIL FÜR GUMMIERTE RÄDER MIT BETÄTIGUNGSMECHANISMUS
SOUPAPE POUR ROUES CAOUTCHOUTÉES AVEC UN MÉCANISME D'ACTIONNEMENT

(30) Priority: 05.03.2021 IT 202100005231
(43) Date of publication of application: 07.09.2022
(73) Proprietor: Wonder SPA, 26100 Cremona (CR) (IT)
(72) Inventor: CAPELLI, Andrea, I-26100 CREMONA (IT); CAZZANTI, Stefano, I-26100 CREMONA (IT); GALLI, Giancarlo, I-26100 CREMONA (IT); GOSI, Matteo, I-26100 CREMONA (IT)
(74) Representative: Gualeni, Nadia

(56) References cited:
- EP-A1- 0 106 966
- EP-A1- 3 736 473
- CN-U- 204 664 516
- US-A- 3 368 603
- US-A- 4 171 119
- US-A1- 2004 040 596
- US-A1- 2020 070 600

## Description

The present invention relates to a valve for inflating tires of rubberized wheels, in particular of vehicles, where the term "vehicles" means motorcars, vans, motorcycles, and means of transport on tires in general.

Specifically, the invention relates to a valve having an inner actuating mechanism for the inflation/deflation of tires, comprising a minimum number of parts and capable of maximizing the flow of air through the valve during the filling and discharging operations.

Known tire valves of the snap-in or clamp-in type generally consist of a main body, referred to as a valve body or armature, of cylindrical tubular shape which acts as a structural housing for an inner mechanism having the task of connecting the interior of said rubberized wheels to the outside environment and allowing the air to pass, if required. The valve body is partially covered by a rubber ring which acts as a sealing gasket when the valve is mounted to the wheel through a hole drilled in the rim.

The valve body in the plastic snap-in valves is made of plastic material, which makes these valves lighter, easily disposable of, and recyclable compared to the conventional valves with valve bodies made of metal material, typically brass or aluminum.

An example of known plastic snap-in valves is disclosed in US 4 171 119 A, which describes a valve having a valve body made of plastic partially covered by a rubber ring suitably shaped to form the proximal end, or valve head, intended to exit upstream of the rim hole at the installed location. The inner mechanism for tire inflation/deflation comprises a sealing pin pushed into the closed position by a spring. In such a known valve, in order to place the spring and properly guide the sealing pin, the valve body consists of two separate elements, assembled together to form the valve body. It is noted that the inner mechanism for tire inflation/deflation cannot be removed from the valve except by destroying it beyond repair. Furthermore, in order to allow the tire deflation, the inner mechanism must be kept in an opening condition, either manually or with special tools. US2020/070600A1 discloses a valve according to the preamble of independent claim 1.

All of these aspects, which are common for today's known plastic valves, have some disadvantages.

A first critical issue of the known valves is the step of assembling the inner inflation/deflation mechanism in the valve body, which is quite complex because of the different components involved.

Furthermore, a high structural complexity and a large number of inner components does not allow maximizing the flow of air through the valve during the inflation or deflation operations. This results in long tire inflation/deflation times.

Another critical issue with known valves is related to how the inner mechanism is opened to allow tire deflation. Indeed, in known valves, it is necessary to hold the opening condition of the inner mechanism either manually or with a special tool for as long as it takes to completely deflate the tire. This makes maintenance operations time-consuming and complex.

Another critical issue with known valves is related to the inability to remove the inner inflation/deflation mechanism. Replacements of the inner mechanism alone are thus unthinkable.

An additional critical issue of known valves is related to the difficulty of removing the inner inflation/deflation mechanism, even by completely destroying the valve. In such plastic valves, where the only metal element is the spring, any attempts to recycle are quite long and tiring.

Therefore, in the field of valves for the inflation of rubberized wheel tires, there is a need for a valve provided with a new inner inflation/deflation mechanism capable of overcoming the limitations of the known valves and meeting the needs of the industry.

Such an object is achieved by a valve for inflating tires of rubberized wheels according to claim 1. Other embodiments of the valve according to the invention are described in the following claims.

Further features and advantages of the present invention will become more comprehensible from the following description of a preferred embodiment thereof given by way of preferred, non-limiting example, in which:
- figure 1a shows a front view of a valve for the inflation of rubberized wheel tires, having an inner actuating mechanism for inflating/deflating the tire according to the present invention;
- figure 1b shows a partial section front view of the valve in figure 1a after the removal of the upper cap;
- figure 2 shows an exploded view of the valve in figure 1a, where the components of the actuating mechanism according to the present invention can be seen;
- figure 3a shows a section view of a component of the valve in figure 2, specifically of the valve body;
- figures 3b and 3c show a top view and a bottom view of the valve body in figure 3a, respectively;
- figure 4a shows an axonometric view of a component of the actuating mechanism, specifically of a sealing pin;
- figures 4b and 4c show a side view and a front view of the component in figure 4a, respectively;
- figures 5a, 5b, and 5c show a partial section front view, a section view rotated by 180°, and a bottom view of the valve in figure 1a in a closing condition, respectively;
- figures 6a, 6b, and 6c show a partial section front view, a section view rotated 180°, and a bottom view of the valve in figure 1a in an opening condition, respectively;
- figure 7 shows a common tool for pushing and/or rotating the pin of the actuating mechanism;
- figure 8 shows a section view of a valve for inflating tires of rubberized wheels, provided with an inner actuating mechanism for inflating/deflating the tire according to the present invention, in a further embodiment;
- figure 9 shows an axonometric view of a component of the actuating mechanism of the valve in figure 8, specifically of a sealing pin.

With reference to the aforesaid figures, reference numeral 1 indicates as a whole a valve for inflating tires of rubberized wheels according to the present invention.

A snap-in type valve is shown in the examples, i.e., of the type being associable with the metal wheel rim by means of elastic snap-in locking means. However, it is clarified that the inner actuating mechanism for tire inflation/deflation according to the present invention is also applicable to other types of valves, because it is independent of how the valve is fixed to the rim.

The valve 1 is adapted to be mounted to a rim of a rubberized wheel, by elastic snap-in locking means in the case of snap-in type configuration, or a nut (in the case of clamp-in type configuration).

The valve 1 substantially comprises a valve body 2, also referred to as an armature, an actuating mechanism 3 arranged inside said valve body 2, and a rubber ring 4 adapted to partially cover said valve body 2.

The valve 1 comprises a head 11 arranged at a proximal end with respect to a rim at the installed position. A closing and protecting cap 7 is screwed to cover a distal opening 131 at the opposite end, referred to as the distal end 13. The distal end 13 of the valve 1 is insertable through a hole in the rim while the proximal end 12, and in particular the head 11 provided with a proximal opening 121, is intended to be engaged in said hole for fixing the valve in place on the rim.

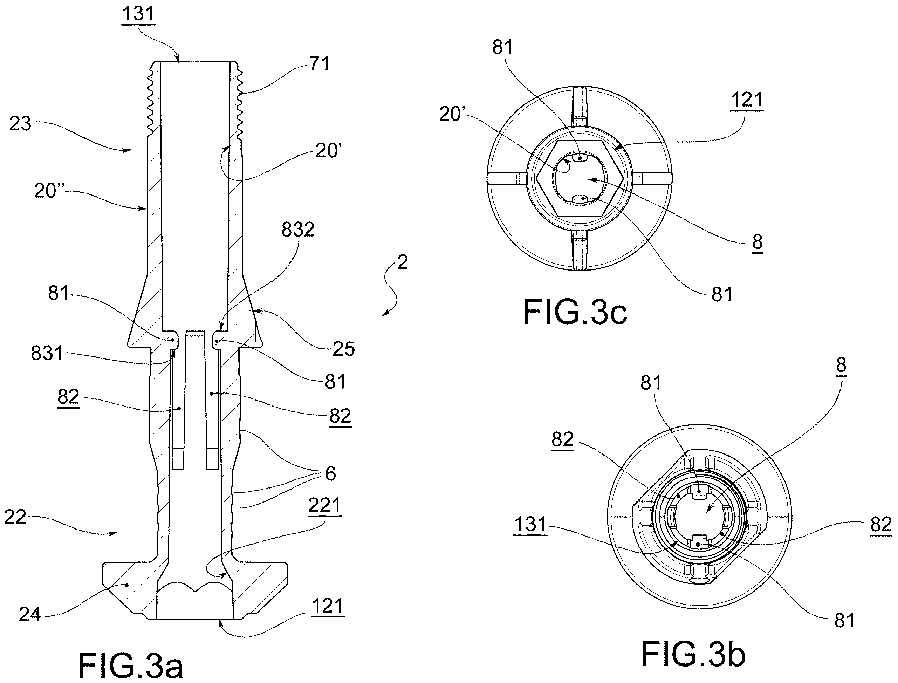

The valve body 2, shown in detail in figures 3a and 3b, is cylindrical in shape, is axially hollow, and is adapted to connect the interior of a rubberized wheel to the outside environment and to allow air and a possible tire repair fluid to pass.

Preferably, the valve body 2 is in one piece.

The valve body 2 has an outer surface 20" with cylindrical symmetry and an inner surface 20' with cylindrical symmetry.

The valve body 2 is partially covered by a rubber ring 4 which acts as a sealing gasket when the valve 1 is mounted to the wheel. Preferably, the valve body 2 extends into the rubber ring 4 over the entire longitudinal extension of the valve 1, i.e., up to the proximal end 12.

The valve body 2 comprises a distal portion 23 which defines the distal end 13 of the valve 1, and a proximal portion 22 which at least partially defines the proximal end 12 of the valve 1.

The distal portion 23 of the valve body 2 has, at the free end thereof, an outer thread 71 to receive the closing cap 7 and to be coupled to the inflation systems. Preferably, the distal portion 23 comprises a circumferentially protruding backing element 25 just before the beginning of the proximal portion 22, and thus in a substantially central position of the valve body 2.

The proximal portion 22 of the valve body 2 is adapted to be covered by the rubber ring 4, and thus to be embedded therein. The proximal portion 22 comprises, at the free end, a body head 24 circumferentially protruding from the valve body 2 and having the largest diameter of the whole remaining valve body 2.

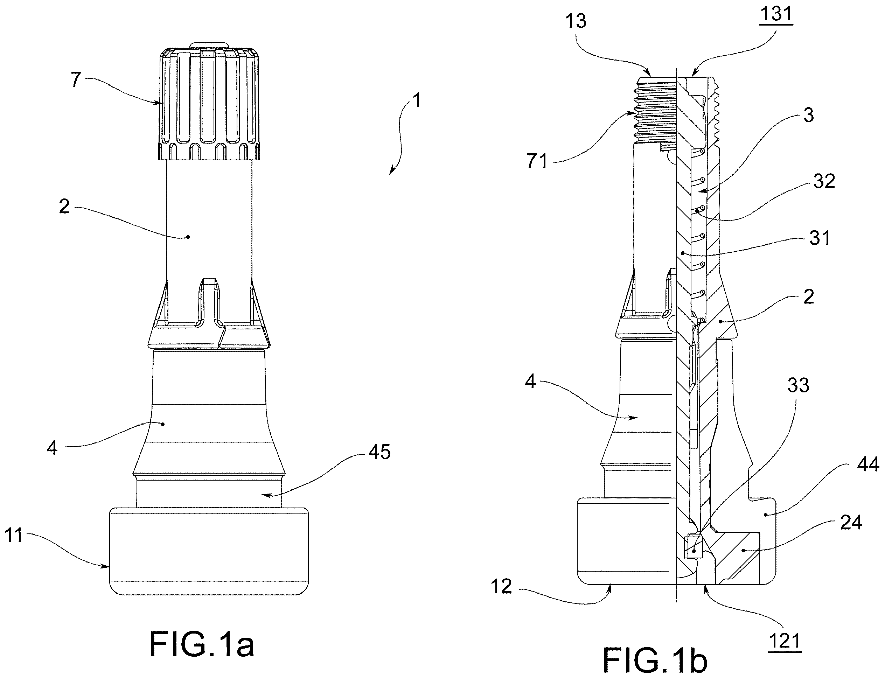

Preferably, as shown in figure 1b, the body head 24 is fully embedded in the rubber ring 4, without axially protruding underneath it. The rubber ring 4 thus completely covers the proximal portion 22 of the valve body 2.

The rubber ring 4 comprises a distal portion 43 and a proximal portion 42 which at least partially defines the proximal end 12 of the valve 1.

The proximal portion 42 of the rubber ring 4 comprises, at the free end thereof, a circumferentially protruding ring head 44 having the largest diameter of the whole remaining rubber ring 4.

The proximal portion 42 of the rubber ring 4 comprises, downstream of the ring head 44, an annular groove 45 adapted to accommodate the edge of the rim hole.

The outer surface 20" of the valve body 2 intended to be covered by the rubber ring 4 comprises a plurality of annular ribs 6 to facilitate the retention of the rubber ring 4 on the valve body 2 and promote the pressure sealing. Indeed, in order to obtain the valve 1, the valve body 2 must be inserted into the rubber ring 4, so that the proximal portion 22 of the valve body 2 is completely covered by the rubber ring 4.

The inner portion of the valve body 2, and in particular the inner surface 20' thereof shown in figure 3a, intended to cooperate with the actuating mechanism 3 for the tire inflation/deflation according to the present invention, will now be described in detail.

The distal portion 23 of the valve body 2, in which an elastic thrust element 32 of the actuating mechanism 3 is housed, has a larger inner diameter than the inner diameter at the proximal portion 22.

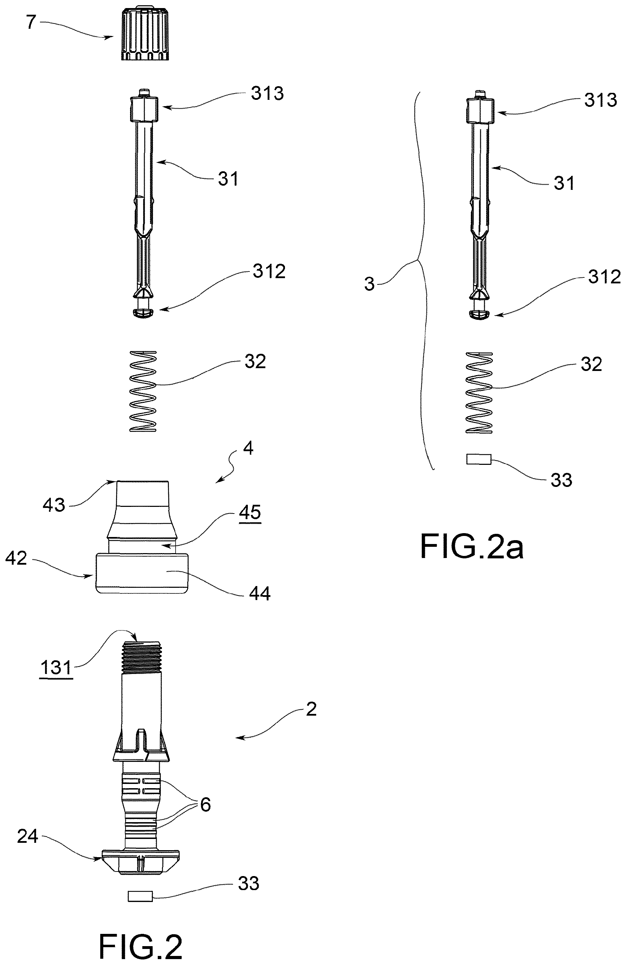

In the example in figures 1 to 7, at the end of the proximal portion 22, just before the proximal opening 121 of the valve 1, a preferably frustoconical sealing seat 221 is defined, in which a sealing ring 33 of the actuating mechanism 3 is housed. In such a solution, the valve sealing is obtained underneath the annular groove 45 and thus inside the tire.

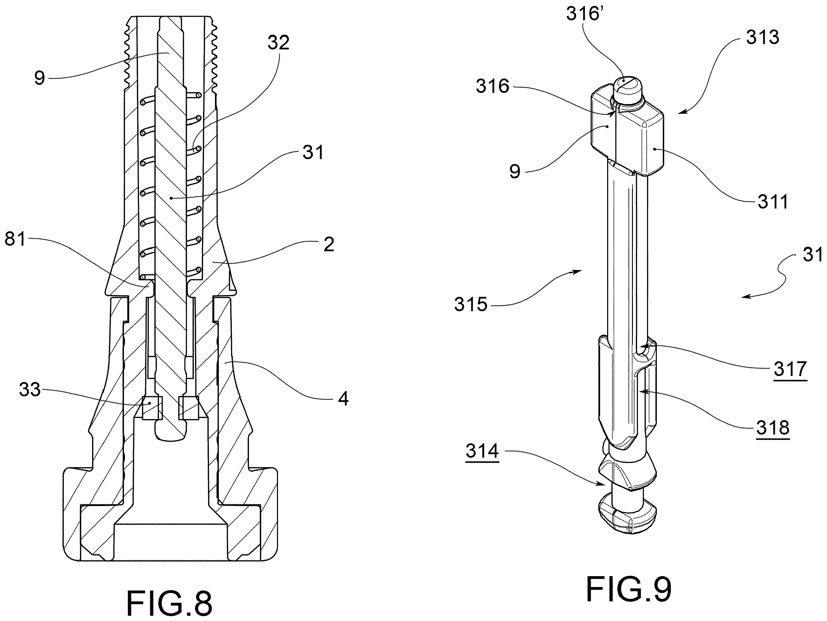

In the example in figures 8 and 9, the preferably frustoconical sealing seat 221, in which a sealing ring 33 of the actuating mechanism 3 is housed, is positioned substantially in the center of the valve body 2. In such a solution, the valve sealing is obtained above the annular groove 45 and thus outside the tire.

In a central position of the valve body 2, i.e., at the joining area between the proximal portion 22 and the distal portion 23, a shaped passageway 8, shown in figures 3b and 3c, is provided to allow selectively the axial sliding or axial locking of a pin 31 of the actuating mechanism 3. The shaped passageway 8 comprises a pair of locking teeth 81, which internally protrude and face each other. Each locking tooth 81 defines an upper abutment surface 832, facing the distal portion 23, and a lower abutment surface 831, facing the proximal portion 22. The upper abutment surface 832 provides an axial backing element for an elastic thrust element 32 of the actuating mechanism 3. The lower abutment surface 831 provides an axial backing element for a pin 31 of the actuating mechanism 3 during the opening step or for keeping the mechanism open.

Preferably, the shaped passageway 8 comprises, underneath the pair of locking teeth 81, in the direction of the proximal portion 22, at least one pair of body grooves 82 obtained on the inner surface 20'. Preferably, four body grooves 82 are provided evenly distributed along the inner circumference of the valve body 2. Preferably, said body grooves 82 are axially offset with respect to the locking teeth 81. The presence of the body grooves 82 allows increasing the free space through the valve body 2, thus maximizing the flow of air through the valve 1 during the filling or discharging step.

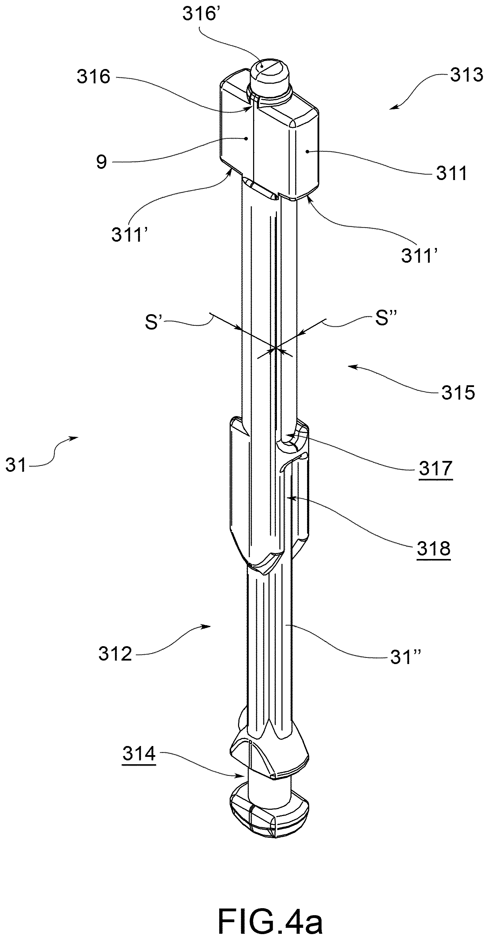

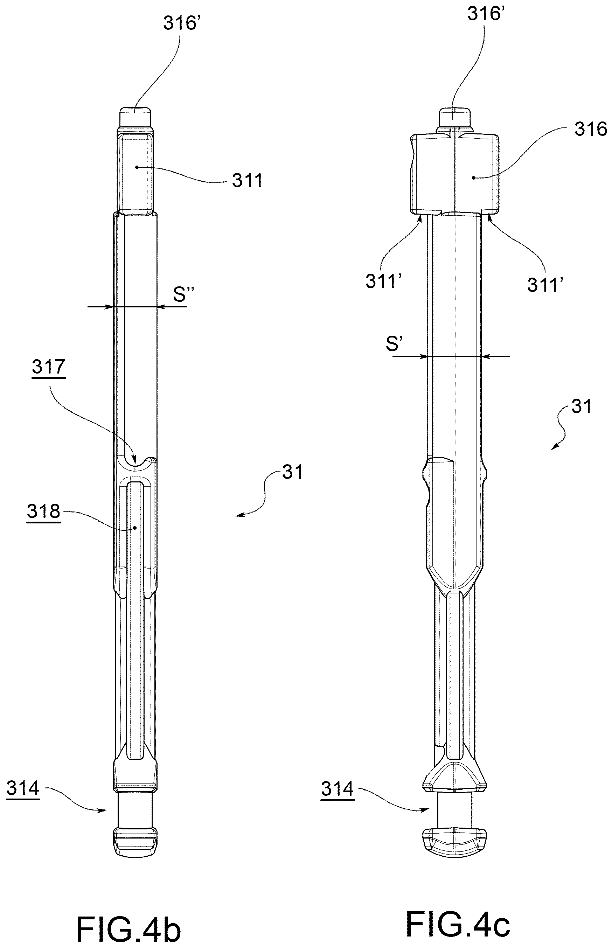

An actuating mechanism 3 for inflating/deflating the tire according to the present invention will now be described in detail. Such an actuating mechanism 3 can be created in a long variant as in figure 4a and a short variant as in figure 9.
In the long-variant embodiment shown in figure 4a, the sealing seat 221 of the valve body 2 is at the proximal end 12 and the pin 31 of the actuating mechanism 3 extends from the proximal end 12 to the distal end 13.
In the short-variant embodiment shown in figures 8 and 9, the sealing seat 221 of the valve body 2 is retracted with respect to the proximal end 12 and the pin 31 of the actuating mechanism 3 extends from the proximal end 12 and ends before the distal end 13. In particular, the sealing seat 221 of the valve body 2 is arranged longitudinally above the annular groove 45 in which the tire rim is inserted.

The actuating mechanism 3 comprises a pin 31 at a distal end of which an elastic element 32 is fitted, such as an axial spring, and a sealing ring 33 is arranged at an opposite proximal end.

The pin 31 comprises a distal zone 313 provided with a gripping portion 316 which allows gripping the pin itself through the distal opening 131 of the valve 1, using a suitable tool described later. Preferably, the gripping portion 316 is provided with an upper axial coupling protuberance 316' also adapted to guide and center the tool described below.

The distal zone 313 is provided with a backing element 311 which defines at least one abutment surface 311' for the elastic thrust element 32.

Preferably, the pin 31 comprises a paddle-like portion 9 arranged at the distal zone 313, which forms the gripping portion 316 at the front and the backing element 311 and the abutment surfaces 311' thereof at the bottom.

The pin 31 comprises a proximal zone 312 provided with a housing 314, such as an annular groove, in which the sealing ring 33 is snap-engageable.

A pin body 315 characterized by a flattened section, preferably substantially polygonal, with a pair of flattened sides S' and a pair of narrow sides S" is defined between the distal zone 313 and the proximal zone 312. Such a solution allows leaving a wide free space through the valve body 2, thus maximizing the flow of air through the valve 1 during the filling or discharging step.

The pin body 315 is centrally provided with at least one locking housing 317 adapted to engage at least one locking tooth 81 of the shaped passageway 8 defined inside the valve body 2. Preferably, the locking housing 317 is a hook-shaped or U-shaped protrusion arranged on a narrow side S" of the pin body 315. Preferably, a pair of locking housings 317 is provided to obtain a bayonet coupling with the pair of locking teeth 81.

Preferably, underneath the locking housing 317, in the direction of the distal zone 313, the pin body 315 is provided with a pin groove 318, obtained on the outer pin surface 31". Preferably, two opposing pin slots 318 are provided in line underneath the two locking housings 317. The presence of the pin grooves 318 allows increasing the free space through the valve body 2, thus maximizing the flow of air through the valve 1 during the filling or discharging step. Furthermore, the presence of the pin grooves 318 allows avoiding an accumulation of plastic material when molding the valve body 2, which could compromise the geometry thereof due to phenomena such as suctions or deformations of the piece after molding.

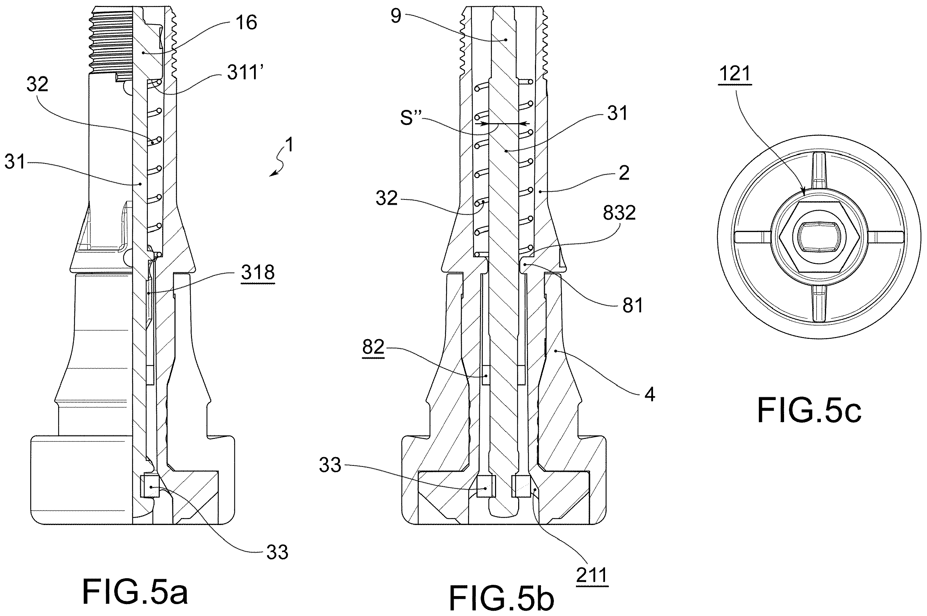

When the actuating mechanism 3 is inserted into the valve body 2, as shown in figure 1b, the elastic thrust element 32 is fitted on the pin 31 and compressed between the backing element 311 of the pin itself and the upper abutment surface 832 of the locking teeth 81 of the shaped passageway 8 within the valve body 2. The elastic element 32 thus compressed applies a thrust to the pin 31 in the distal direction to press the sealing ring 33 of the actuating mechanism 3 against the sealing seat 221 within the valve body 2, to close the inner passageway of the valve 1, as shown in figure 5b.

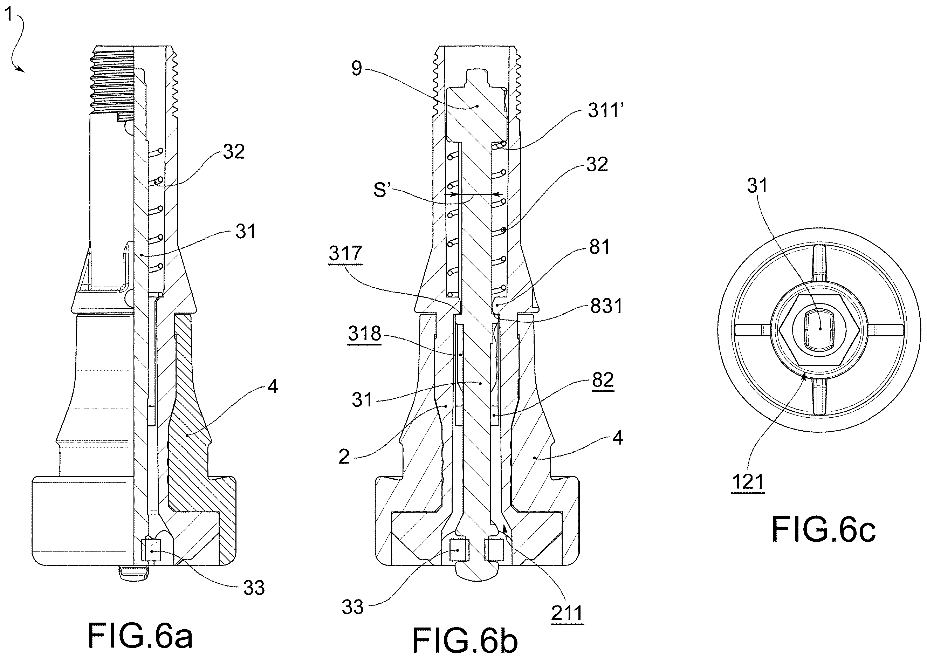

The opening of the valve 1 is achieved by pushing the pin 31 in the opposite direction with respect to the elastic element 32, i.e., in the proximal direction to move the sealing ring 33 away from the sealing seat 221 within the valve body 2, when opening the inner passageway of the valve 1, as shown in figure 6b.

If a rotation of the pin 31 is added in addition to the push in the proximal direction, it is possible to lock the valve 1 in the opening condition. Indeed, by pushing and rotating the pin 31, the locking teeth 81 of the shaped passageway 8, in particular the lower abutment surfaces 831 thereof, insert into the locking housings 317 of the pin 31, thus obtaining a bayonet coupling. Therefore, advantageously, it is not necessary to maintain any pressure on the pin 31 during the deflating step. In order to reclose the valve 1, it will be sufficient to push and rotate the pin 31 in the opposite direction, freeing the locking teeth 81 of the shaped passageway 8 from the locking housings 317 of the pin 31.

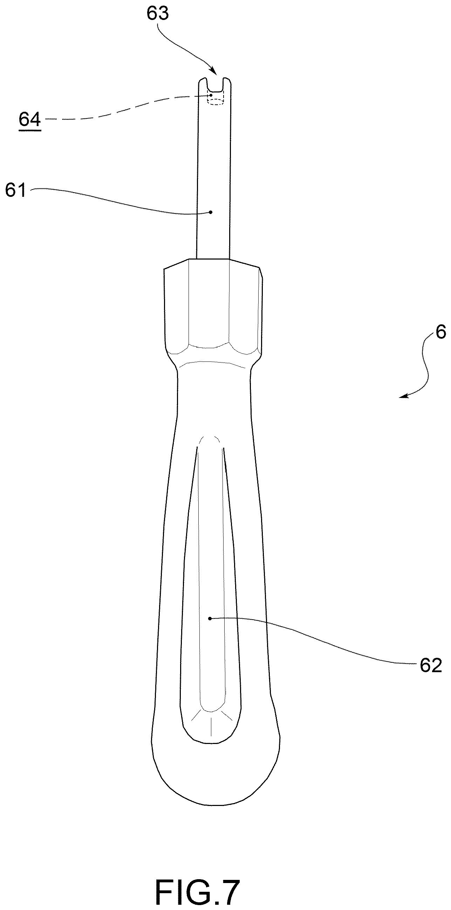

Therefore, it is possible to lock the valve 1 in an opening condition, and the unlock it to restore the closing condition, by acting on the pin 31 by means of a pushing and rotating tool 6, for example, commonly used in tire shops, and depicted in figure 7. Such a tool, in the form of a screwdriver, comprises a cylindrical body 61 provided at one end with a handle 62 and at an opposite end with a U-shaped tip 63 provided with a cylindrical inner chamber 64 at the bottom of the U. Therefore, the pin 31 of the actuating mechanism 3 is designed such that the gripping portion 316 has a profile which is insertable into the shaped tip 63 of the tool 6, and that the upper protuberance 316' can be easily inserted into the inner chamber 64 of the tool 6. Unlike the known valves, there is no need to maintain the thrust on the pin 31 to allow the deflation of the tire. Indeed, it is sufficient to activate the bayonet lock described above using the tool 6, which can then be removed during the entire deflation step.

In order to mount the actuating mechanism 3 inside the valve body 2, it is necessary to:
- fit the elastic thrust element 32 onto the pin 31 from the proximal area 312;
- insert the pin 31 with the elastic element 32, starting from the proximal side 312, into the valve body 2 through the distal opening 131;
- push the pin 31 into the valve body 2, compressing the elastic element 32, until the proximal area 312 thereof provided with the housing 314 comes out of the proximal opening 121 of the valve body 2;
- fit the sealing ring 33 on the pin 31, starting from the proximal zone 312, inserting it into the housing 314 thereof;
- let the pin 31 go freely, which will bring the valve to the closing condition by pushing the elastic element 32.

In order to disassemble the actuating mechanism 3 from the valve body 2, it is sufficient to:
- push the pin 31 into the valve body 2, compressing the spring element 32, until the proximal area 312 thereof on which the sealing ring 33 is fixed comes out;
- remove the sealing ring 33 by cutting it or tearing it or pulling it out of the housing 314 thereof; alternatively, the rear portion of the pin 31 may be cut off once out of the opening 121;
- extract the pin 31, with the elastic element 32 fitted thereon, from the valve body 2 through the distal opening 131 of the valve body 2 and thus easily separate the spring element 32 from the pin 31.

Preferably, the valve 1 is a plastic valve provided with a valve body 2 totally made of plastic material, a rubber sealing ring 4, and an actuating mechanism 3 in which the pin 31 is totally made of plastic material, the sealing ring 33 is made of rubber, and the elastic element 32 is the only metal element. However, it is not excluded that the elastic element 32 may be also totally made of plastic material.

Preferably, the rubber ring 4 is made of ethylene-propylene rubber, preferably EPDM (Ethylene-Propylene Diene Monomer). Preferably, the rubber ring 4 is made of 100% EPDM rubber.

Innovatively, a valve 1 according to the present invention is found to be simple in construction and easy to assemble due to the particular actuating mechanism arranged within said valve body.

Advantageously, in the valve 1 according to the present invention, equipped with the particular actuating mechanism described above, the flow of air through the valve during the filling or discharging operations has been maximized.

Advantageously, in the valve 1 according to the present invention, equipped with the particular actuating mechanism described above, it is not necessary to maintain manually, or with special tools, the opening condition of the internal mechanism for as long as it is necessary to completely deflate the tire, thus simplifying the maintenance operations. Such operations also do not require the inner mechanism to be removed and then mounted back into the valve, as is the case with normally used valves, thus reducing the risk of contamination thereof.

Advantageously, in the valve 1 according to the present invention, equipped with the particular actuating mechanism described above, the inner inflation/deflation mechanism can be removed, thus making it entirely replaceable.

Advantageously, in the valve 1 according to the present invention, equipped with the particular actuating mechanism described above, the inner inflation/deflation mechanism can be easily removed allowing the recycling of the various valve components.

Advantageously, both the pin 31 and the valve body 2 can be molded from plastic using uncomplex molds as no threads or undercuts are provided, for example.

Those skilled in the art can make many changes and variations to the valve described above, all contained within the scope of the invention defined by the following claims.

## Claims

1. A valve (1) for rubberized wheels, having a proximal end (12) for the connection with a rubberized wheel and an opposite distal end (13), said valve (1) comprising:
- a hollow valve body (2) of cylindrical shape, adapted to connect the interior of said rubberized wheel to the outside environment and allow air to pass, said valve body (2) internally defining a sealing seat (221);
- an actuating mechanism (3) of said valve (1) arranged inside the valve body (2), and comprising a pin (31) with a distal zone (313) on which an elastic element (32) is fitted, and with a proximal zone (312) on which a sealing ring (33) is arranged, adapted to sealingly close the sealing seat (221) of the valve body (2) in a closing configuration in which the air is prevented from passing through said valve body (2);
- a rubber ring (4) adapted to partially cover the valve body (2);
**characterized in that** by applying a thrust in the proximal direction and a rotation to the pin (31), at least one locking tooth (81) arranged inside the valve body (2) is inserted into at least one locking housing (317) arranged on the pin (31), thus locking said pin inside the valve body (2) in an opening configuration in which the sealing ring (33) is separated from the sealing seat (221) to allow air or repair fluids to pass through said valve body (2).

2. A valve (1) according to claim 1, wherein:
- the valve body (2) is internally provided with a shaped passageway (8) comprising the at least one locking tooth (81) with a lower abutment surface (831) which provides an axial backing element for the pin (31) of the actuating mechanism (3);
- the pin (31) comprises the at least one locking housing (317) adapted to engage the at least one locking tooth (81) of the shaped passageway (8).

3. A valve (1) according to claim 2, wherein the locking housing (317) is hook-shaped or U-shaped to form a bayonet coupling with the at least one locking tooth (81) of the valve body (2).

4. A valve (1) according to any one of claims 2 to 3, wherein the shaped passageway (8) comprises, underneath the at least one locking tooth (81), at least one body groove (82) axially offset with respect to said locking tooth (81), and/or
wherein the pin (31) comprises, underneath the at least one locking housing (317), at least one pin groove (318) in line with said locking housing (317).

5. A valve (1) according to any one of the preceding claims, wherein:
- the valve body (2) is internally provided with a shaped passageway (8) comprising the at least one locking tooth (81) with an upper abutment surface (832) which provides a lower backing element for the elastic element (32) of the actuating mechanism (3);
- the pin (31) comprises at least one backing element (311) with an abutment surface (311'), which provides an upper backing element for the elastic element (32) of the actuating mechanism (3).

6. A valve (1) according to any one of the preceding claims, wherein the pin (31) distally comprises a paddle-like portion (9) which forms a gripping portion (316) at the front and an upper backing element (311') at the bottom for the elastic element (32) of the actuating mechanism (3).

7. A valve (1) according to any one of the preceding claims, wherein the pin (31) proximally comprises a housing (314), in the shape of an annular groove, in which the sealing ring (33) is snap-engaged.

8. A valve (1) according to any one of the preceding claims, wherein the pin (31) is provided with a pin body (315) having a substantially polygonal section.

9. A valve (1) according to any one of the preceding claims, wherein both the valve body (2) and the pin (31) of the actuating mechanism (3) are made of plastic, and the rubber ring (4) and the sealing ring (33) of the actuating mechanism (3) are made of rubber.

10. A valve (1) according to any one of the preceding claims, wherein the sealing seat (221) of the valve body (2) is at the proximal end (12) and the pin (31) of the actuating mechanism (3) extends from the proximal end (12) to the distal end (13).

11. A valve (1) according to any one of claims from 1 to 9, wherein the sealing seat (221) of the valve body (2) is retracted with respect to the proximal end (12), and the pin (31) of the actuating mechanism (3) extends from the proximal end (12) and ends before the distal end (13) .

12. A valve (1) according to claim 11, wherein the sealing seat (221) is arranged longitudinally above an annular groove (45) of the rubber ring (4) intended to accommodate a rubberized wheel.

## Patentansprüche

1. Ventil (1) für gummierte Räder, die ein proximales Ende (12) für die Verbindung mit einem gummierten Rad und einem gegenüberliegenden distalen Ende (13) aufweist, wobei das Ventil (1) aufweist:
- einen hohlen Ventilkörper (2) mit zylindrischer Form, der derart eingerichtet ist, dass er das Innere des gummierten Rades mit der äußeren Umgebung verbindet und das Durchlassen von Luft ermöglicht, wobei der Ventilkörper (2) im Inneren einen Dichtungssitz (221) definiert;
- einen Betätigungsmechanismus (3) des Ventils (1), der im Inneren des Ventilkörpers (2) angeordnet ist und einen Stift (31) aufweist mit einem distalen Bereich (313), an dem ein elastisches Element (32) eingepasst ist, und mit einem proximalen Bereich (312), an dem ein Dichtungsring (33) angeordnet ist, der derart eingerichtet ist, dass er den Dichtungssitz (221) des Ventilkörpers (2) in einer Schließkonfiguration abdichtend verschließt, in der verhindert wird, dass Luft durch den Ventilkörper (2) durchgelassen wird;
- einen Gummiring (4), der derart eingerichtet ist, dass er den Ventilkörper (2) teilweise abdeckt;
**dadurch gekennzeichnet, dass** durch Aufbringen einer Schubkraft in der proximalen Richtung und einer Drehung zu dem Stift (31) zumindest ein Verriegelungszahn (81), der im Inneren des Ventilkörpers (2) angeordnet ist, in zumindest ein Verriegelungsgehäuse (317) eingeführt wird, das auf dem Stift (31) angeordnet ist, wodurch der Stift im Inneren des Ventilkörpers (2) in einer Öffnungskonfiguration verriegelt wird, in der der Dichtungsring (33) von dem Dichtungssitz (221) getrennt ist, um das Durchlassen von Luft oder Reparaturflüssigkeiten durch den Ventilkörper (2) zu ermöglichen.

2. Ventil (1) nach Anspruch 1, wobei:
- der Ventilkörper (2) im Inneren mit einem geformten Durchgang (8) versehen ist, der den zumindest einen Verriegelungszahn (81) mit einer unteren Anlagefläche (831) aufweist, die ein axiales Abstützelement für den Stift (31) des Betätigungsmechanismus (3) bereitstellt;
- der Stift (31) das zumindest eine Verriegelungsgehäuse (317) aufweist, welches derart eingerichtet ist, dass es in den zumindest einen Verriegelungszahn (81) des geformten Durchgangs (8) eingreift.

3. Ventil (1) nach Anspruch 2, wobei das Verriegelungsgehäuse (317) hakenförmig oder U-förmig ist, um einen Bajonettverschluss mit dem zumindest einen Verriegelungszahn (81) des Ventilkörpers (2) zu bilden.

4. Ventil (1) nach einem der Ansprüche 2 bis 3, wobei der geformte Durchgang (8) unterhalb des zumindest einen Verriegelungszahns (81) zumindest eine gegenüber dem Verriegelungszahn (81) axial versetzte Körpernut (82) aufweist, und/oder
wobei der Stift (31) unterhalb des zumindest einen Verriegelungsgehäuses (317) zumindest eine Stiftnut (318) aufweist, die mit dem Verriegelungsgehäuse (317) fluchtet.

5. Ventil (1) nach einem der vorstehenden Ansprüche, wobei
- der Ventilkörper (2) im Inneren mit einem geformten Durchgang (8) versehen ist, aufweisend den zumindest einen Verriegelungszahn (81) mit einer oberen Anlagefläche (832), die ein unteres Abstützelement für das elastische Element (32) des Betätigungsmechanismus (3) bereitstellt;
- der Stift (31) zumindest ein Abstützelement (311) mit einer Anlagefläche (311') aufweist, die ein oberes Abstützelement für das elastische Element (32) des Betätigungsmechanismus (3) bereitstellt.

6. Ventil (1) nach einem der vorstehenden Ansprüche, wobei der Stift (31) distal einen paddelartigen Abschnitt (9) aufweist, der vorne einen Griffabschnitt (316) und an der Unterseite ein oberes Abstützelement (311') für das elastische Element (32) des Betätigungsmechanismus (3) ausbildet.

7. Ventil (1) nach einem der vorstehenden Ansprüche, wobei der Stift (31) proximal ein Gehäuse (314) in Form einer Ringnut aufweist, in die der Dichtungsring (33) eingerastet ist.

8. Ventil (1) nach einem der vorstehenden Ansprüche, wobei der Stift (31) mit einem Stiftkörper (315) versehen ist, der einen im Wesentlichen polygonalen Querschnitt aufweist.

9. Ventil (1) nach einem der vorstehenden Ansprüche, wobei sowohl der Ventilkörper (2) als auch der Stift (31) des Betätigungsmechanismus (3) aus Kunststoff hergestellt sind und der Gummiring (4) und der Dichtungsring (33) des Betätigungsmechanismus (3) aus Gummi hergestellt sind.

10. Ventil (1) nach einem der vorstehenden Ansprüche, wobei sich der Dichtungssitz (221) des Ventilkörpers (2) am proximalen Ende (12) befindet und sich der Stift (31) des Betätigungsmechanismus (3) vom proximalen Ende (12) zum distalen Ende (13) erstreckt.

11. Ventil (1) nach einem der Ansprüche 1 bis 9, wobei der Dichtungssitz (221) des Ventilkörpers (2) gegenüber dem proximalen Ende (12) zurückgezogen ist, und sich der Stift (31) des Betätigungsmechanismus (3) von dem proximalen Ende (12) erstreckt und vor dem distalen Ende (13) endet.

12. Ventil (1) nach Anspruch 11, wobei der Dichtungssitz (221) in Längsrichtung oberhalb einer Ringnut (45) des Gummirings (4) angeordnet ist, die zum Aufnehmen eines gummierten Rades bestimmt ist.

## Revendications

1. Soupape (1) pour roues caoutchoutées, ayant une extrémité proximale (12) pour le raccordement à une roue caoutchoutée et une extrémité distale opposée (13), ladite soupape (1) comprenant :
- un corps de soupape creux (2) de forme cylindrique, conçu pour raccorder l'intérieur de ladite roue caoutchoutée à l'environnement extérieur et permettre à l'air de passer, ledit corps de soupape (2) définissant en interne un siège d'étanchéité (221) ;
- un mécanisme d'actionnement (3) de ladite soupape (1) agencé à l'intérieur du corps de soupape (2), et comprenant une tige (31) avec une zone distale (313) sur laquelle un élément élastique (32) est installé, et avec une zone proximale (312) sur laquelle une bague d'étanchéité (33) est agencée, conçu pour fermer hermétiquement le siège d'étanchéité (221) du corps de soupape (2) dans une configuration fermée dans laquelle l'air ne peut pas passer à travers ledit corps de soupape (2) ;
- une bague en caoutchouc (4) conçue pour recouvrir partiellement le corps de soupape (2) ;
**caractérisée en ce que** par application d'une poussée dans la direction proximale et d'une rotation sur la tige (31), au moins une dent de verrouillage (81) agencée à l'intérieur du corps de soupape (2) est insérée dans au moins un logement de verrouillage (317) agencé sur la tige (31), verrouillant ainsi ladite tige à l'intérieur du corps de soupape (2) dans une configuration d'ouverture dans laquelle la bague d'étanchéité (33) est séparée du siège d'étanchéité (221) pour permettre à l'air ou à des fluides de réparation de passer à travers ledit corps de soupape (2).

2. Soupape (1) selon la revendication 1, dans laquelle :
- le corps de soupape (2) est doté en interne d'un passage façonné (8) comprenant ladite au moins une dent de verrouillage (81) avec une surface de butée inférieure (831) qui fournit un élément d'appui axial à la tige (31) du mécanisme d'actionnement (3) ;
- la tige (31) comprend ledit au moins un logement de verrouillage (317) conçu pour venir en prise avec ladite au moins une dent de verrouillage (81) du passage façonné (8).

3. Soupape (1) selon la revendication 2, dans laquelle le logement de verrouillage (317) est en forme de crochet ou en forme de U pour former un couplage à baïonnette avec ladite au moins une dent de verrouillage (81) du corps de soupape (2).

4. Soupape (1) selon l'une quelconque des revendications 2 à 3, dans laquelle le passage façonné (8) comprend, sous ladite au moins une dent de verrouillage (81), au moins une rainure de corps (82) décalée axialement par rapport à ladite dent de verrouillage (81), et/ou
dans laquelle la tige (31) comprend, sous ledit au moins un logement de verrouillage (317), au moins une rainure de tige (318) en adéquation avec ledit logement de verrouillage (317).

5. Soupape (1) selon l'une quelconque des revendications précédentes, dans laquelle :
- le corps de soupape (2) est doté en interne d'un passage façonné (8) comprenant ladite au moins une dent de verrouillage (81) avec une surface de butée supérieure (832) qui fournit un élément d'appui inférieur à l'élément élastique (32) du mécanisme d'actionnement (3) ;
- la tige (31) comprend au moins un élément d'appui (311) avec une surface de butée (311'), qui fournit un élément d'appui supérieur à l'élément élastique (32) du mécanisme d'actionnement (3).

6. Soupape (1) selon l'une quelconque des revendications précédentes, dans laquelle la tige (31) comprend de manière distale une partie en forme de pale (9) qui forme une partie de préhension (316) à l'avant et un élément d'appui supérieur (311') à la partie inférieure pour l'élément élastique (32) du mécanisme d'actionnement (3).

7. Soupape (1) selon l'une quelconque des revendications précédentes, dans laquelle la tige (31) comprend de manière proximale un logement (314), en forme de rainure annulaire, dans lequel la bague d'étanchéité (33) est mise en prise par encliquetage.

8. Soupape (1) selon l'une quelconque des revendications précédentes, dans laquelle la tige (31) est dotée d'un corps de tige (315) ayant une section sensiblement polygonale.

9. Soupape (1) selon l'une quelconque des revendications précédentes, dans laquelle à la fois le corps de soupape (2) et la tige (31) du mécanisme d'actionnement (3) sont en plastique, et la bague en caoutchouc (4) et la bague d'étanchéité (33) du mécanisme d'actionnement (3) sont en caoutchouc.

10. Soupape (1) selon l'une quelconque des revendications précédentes, dans laquelle le siège d'étanchéité (221) du corps de soupape (2) se situe à l'extrémité proximale (12) et la tige (31) du mécanisme d'actionnement (3) s'étend de l'extrémité proximale (12) à l'extrémité distale (13).

11. Soupape (1) selon l'une quelconque des revendications 1 à 9, dans laquelle le siège d'étanchéité (221) du corps de soupape (2) est rétracté par rapport à l'extrémité proximale (12), et la tige (31) du mécanisme d'actionnement (3) s'étend à partir de l'extrémité proximale (12) et prend fin avant l'extrémité distale (13).

12. Soupape (1) selon la revendication 11, dans laquelle le siège d'étanchéité (221) est agencé longitudinalement au-dessus d'une rainure annulaire (45) de la bague en caoutchouc (4) destinée à recevoir une roue caoutchoutée.
